# EUROPEAN PATENT SPECIFICATION

(11) **EP 3 531 431 B1**
(45) Date of publication and mention of the grant of the patent: **16.09.2020**
(21) Application number: 18157991.3
(22) Date of filing: 22.02.2018
(51) Int. Cl.: H01B 17/28, H02G 15/072, H01G 4/32

(54) **BUSHING ELECTRODE WITH EDGES HAVING FIELD GRADING PROPERTIES AND METHOD FOR MANUFACTURING SUCH A BUSHING**
BUCHSENELEKTRODE MIT KANTEN MIT FELDABSTUFUNGSEIGENSCHAFTEN UND VERFAHREN ZUR HERSTELLUNG EINER SOLCHEN BUCHSE
ÉLECTRODE DE TRAVERSÉE AYANT DES BORDS PRÉSENTANT DES PROPRIÉTÉS DE GRADATION DE CHAMP ET PROCÉDÉ DE FABRICATION D'UNE TELLE BAGUE

(43) Date of publication of application: 28.08.2019
(73) Proprietor: ABB Power Grids Switzerland AG, 5400 Baden (CH)
(72) Inventor: KANJE-NORDBERG, Jens, 771 34 Ludvika (SE); SJÖBERG, Peter, 771 43 Ludvika (SE); PENAYO, Francisco, 777 93 Söderbärke (SE); ERIKSSON, Anders Bo, 771 51 Ludvika (SE); FLORESJÖ, Robert, 784 37 Borlänge (SE); NATZ, Richard, 784 33 Borlänge (SE)
(74) Representative: Kransell & Wennborg KB

(56) References cited:
- GB-A- 790 860
- US-A- 3 936 545
- US-A- 6 018 454
- US-A1- 2003 075 777
- US-A1- 2015 214 095

## Description

### FIELD OF INVENTION

The present invention generally relates to high voltage equipment. More particularly the present invention relates to a bushing for high voltage applications as well as to a method form forming an electrode for such a bushing.

### BACKGROUND

Bushings for high-voltage conductors are known to be used for enabling interconnection of electric power devices like for instance between such devices provided in separate rooms. Such a bushing is then typically provided in a wall between such rooms. A bushing may also be provided for measurements in equipment such as transformers.

One type of bushing, a so-called condenser bushing, is frequently used in order to allow a conductor to penetrate a metallic wall when the potential difference between conductor and wall is large. In condenser bushings cylindrical metallic foils or electrodes, having different radii, are placed concentrically around an inner conductor. By varying the electrode lengths, such that the electrodes close to the inner conductor are longer than those further out, a more homogeneous electric field is created leading in turn to a reduction of the maximum field stress. In this manner the probability for breakdown and failure can be lowered.

One way of obtaining such an electrode is through printing a metallic layer on a substrate. This is for instance described in US 2007/0158106 where electrode plates in a condenser bushing are obtained using ink patches. Another document using printing is EP 3113194, where a conductive layer that may be an electrode in a bushing is applied on a substrate through printing a conductive ink on the substrate.

As the voltage ratings become higher, the bushing size increases. The footprint, weight, and cost also increase accordingly. It is therefore highly desirable to limit the size by distributing the field stress as evenly as possible and to avoid regions with locally excessive field levels. This fact, together with the observation that bushings are one of the most highly stressed components in the power distribution chain, implies that their design is crucial for the economy and reliability of any high voltage power distribution network.

A bushing is particularly sensitive in the vicinity of the electrode edges. With a given potential difference between an electrode and its closest neighbor, the maximum electric field is found just at the edge of the electrode. The metallic electrodes in a condenser bushing are usually very thin and therefore the field enhancement can be quite large. It is therefore of interest to reduce these stresses.

This further reduction of field strength is typically achieved through providing the edges with field grading material.

There are some ways in which this may be done.

US 2013/0025911 discloses a condenser core electrode provided on a dielectric material using conductive ink. A field grading material is then applied, which field grading material may be a polymer composite filled with particles giving rise to non-linear electric properties.

US 4847450 is concerned with a printed foil and a field grading material in the form of a mastic.

US 2003/0075777 discloses the production of a capacitive element of a capacitor, where an edge zone of an electrode is treated for obtaining a field strength gradient. One way of obtaining the field strength gradient is through oxidation. The document also mentions that the ideas are applicable for bushings.

GB 790860 discloses a capacitor where the edge of an electrode is treated in an oxalic acid forming bath in order to form a porous oxide, where the oxidation is performed in order to increase mechanical strength.

US 2015/0214095 discloses the printing of metal on a semiconductor wafer, followed by drying and sintering.

US 3936545 discloses oxidizing areas of a metallic layer by local corrosion. Bismuth and metal are vapour deposited in order to obtain an oxidized area.

US 6018454 is concerned with electrodes of noise filter capacitors for household electric appliances. In relation to an electrode, the document discloses the obtaining of a boundary zone of a deposited metal layer zone with a continuously decreasing thickness.

However, there is a problem in that the application of the field grading material in many cases may be too coarse. It may therefore be of interest to improve the precision with which the edges with field grading material are obtained.

### SUMMARY OF THE INVENTION

One object of the present invention is to provide a method of forming a bushing that addresses the problem of improved precision in the forming of field grading material.

This object is according to the present invention obtained through a method for forming an electrode for a bushing intended for high voltage applications according to claim 1.

Another object is to obtain a bushing that has a more precisely formed field-grading material.

This object is also achieved through a bushing for high voltage applications according to claim 9.

The present invention has a number of advantages. In particular, it provides good precision in the forming of field grading material in the edges of a bushing electrode. This can also be obtained using an economical production technique with a limited number of production steps.

### BRIEF DESCRIPTION OF THE DRAWINGS

The present invention will in the following be described with reference being made to the accompanying drawings, where
fig. 1 schematically shows a bushing with an inner conductor surrounded by a field reducing volume comprising a number of electrodes,
fig. 2 schematically shows a front view of an electrode, the edges of which have been treated for improving the field grading properties,
fig. 3 schematically shows a flow chart depicting a number of steps in a method of forming the electrode with field grading material,
fig. 4a - 4e show a substrate with various layers of material during the forming of the electrode with field-grading material.

### DETAILED DESCRIPTION OF THE INVENTION

The present invention concerns a bushing for use in high voltage environments, such as high voltage power transmission environments. A bushing may as an example be a transformer bushing used for insulating the high voltage conductor from a grounded transformer housing. It may also be a wall bushing such as a bushing passing through a wall of a building, for instance a converter hall.

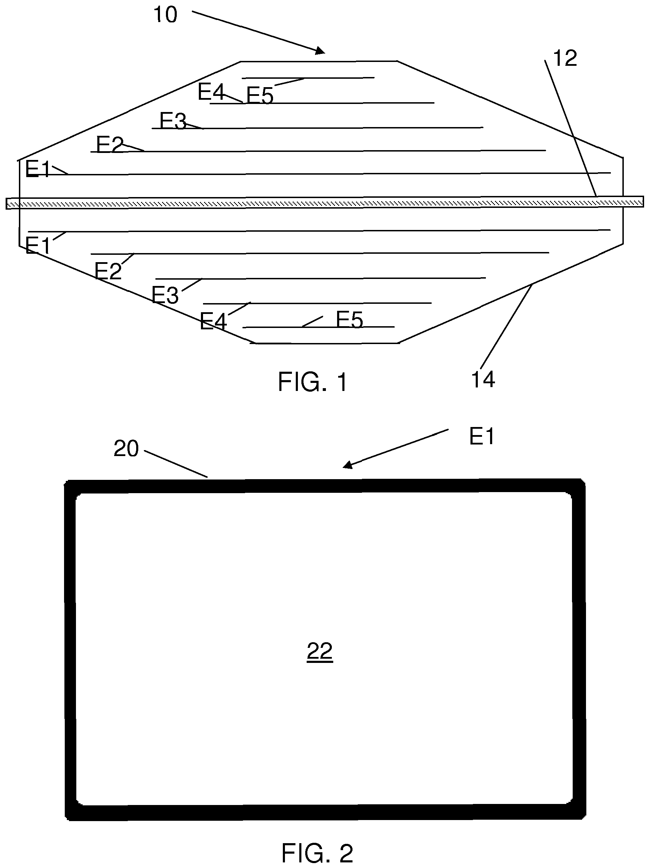

Fig. 1 schematically shows a bushing 10 comprising a central inner conductor 12 surrounded by a field reducing volume 14 comprising a number of cylindrical electrodes E1, E2, E3, E4 and E5 of electrically conducting material, such as metallic electrodes. The central inner conductor 12 passes through the middle of the bushing 10 and therefore the bushing 10 surrounds the central electrical conductor 12. The central inner conductor 12 is thereby radially surrounded by at least one electrode of conductive material, which electrode may have a thickness in the range of 0.1 - 100 11m and may as an example be about 1 µm. The electrodes E1, E2, E3, E4 and E5 may be coaxial with the conductor 12 but have different radii. Thereby the conductor 12 may also define an axis that the electrodes E1, E2, E3, E4 and E5 surround. In this exemplifying bushing 10 there is thus a first innermost electrode E1, which surrounds the central conductor 12. A second electrode E2 in turn surrounds the first electrode E1. Thereafter follows a third electrode E3 that surrounds the second electrode E2. A fourth electrode E4 surrounds the third electrode E3. Finally a fifth and outermost electrode E5 surrounds the fourth electrode E4. It should here be realized that the number of electrodes is merely exemplifying. The electrodes E1, E2, E3, E4 and E5 may be separated from each other and the inner conductor 12 by gaps in the radial direction from the central conductor 12, where a gap may as an example have a width of 250 µm. In these gaps electrical insulation may be provided, which insulation may comprise solid insulation as well as fluid insulation. Solid insulation may be cellulose paper, while fluid insulation may be transformer oil. Thereby the solid insulation may also be immersed in the fluid insulation. The electrodes and insulation are finally surrounded by bushing walls, which walls may be provided through a ceramic material or through an isolation or dielectric material if this isolation or dielectric material is solid.

The boundary points or edges of the above-mentioned electrodes are furthermore treated for exhibiting field-grading properties..

This treatment, which has been performed on the edges of the electrode, will make the electrode even out the electrical field along the edges, which will decrease stress on these electrode edges.

Fig. 2 schematically shows a view from above of the first electrode E1, having a central region 22 of conductive material surrounded by edges 20 having been treated for field-grading purposes. The treatment has led to the material of the edges being field-grading material to a depth of 100 - 500 nm, for instance to a depth of 300 nm.

It is important that the thickness and width of the field-grading material is tightly controlled in order to obtain the best possible field grading. The precision with which the field grading material is provided is thus important for the obtaining of good field grading properties.

Aspects of the invention are directed towards a method of producing an electrode of a bushing having an edge with field grading material, where the thickness and width of the material can be obtained with a good precision.

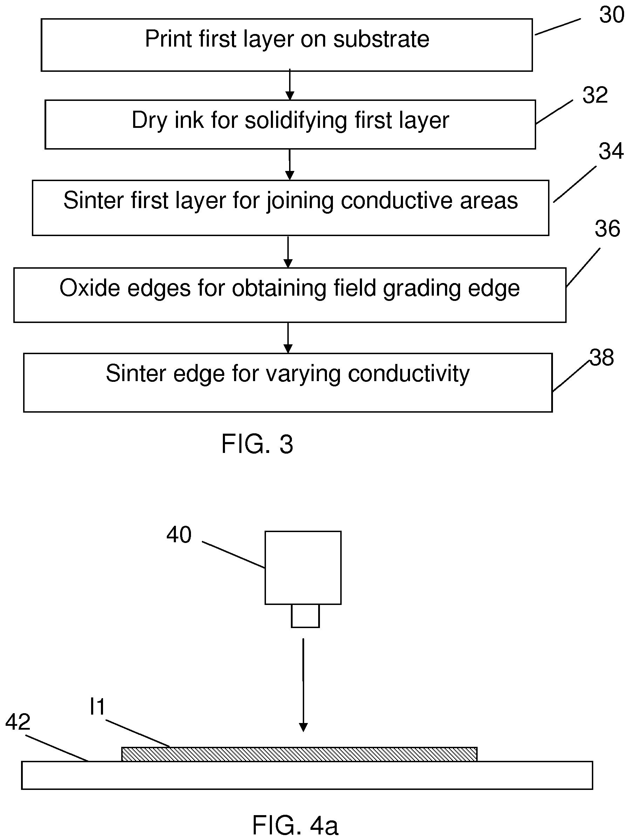

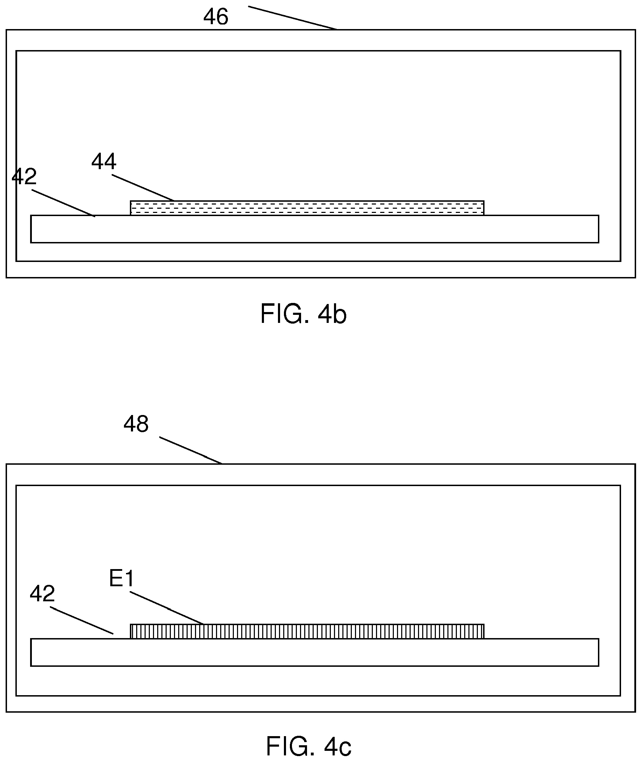

This method will now be described with reference being made also to fig. 3 and 4a - 4e, where fig. 3 shows a flow chart of a number of steps in the method of forming the electrode with field grading material and fig. 4a - 4e show a substrate with various layers of material during the forming of the electrode with field-grading material.

The method starts by obtaining the electrode E1 comprising an electrically conductive metal.

The electrode E1 may more particularly be obtained through printing a first layer of conductive material on a substrate, step 30. As can be seen in fig. 4a this printing may be done by using a printer 40 to print a first ink I1 on a substrate 42 for forming a first layer that is to become or form the electrode. The substrate 42 may here be a polymer substrate. As an alternative it may be made of paper, such as insulation paper, like a cellulose paper, used as insulation in the bushing. The first ink I1 may here be an ink comprising nanoparticles of a conductive metal such as Silver, Aluminum, Copper, Titanium, Iridium or Zinc in a solvent.

In the present example the nanoparticles are of the metal Titanium.

The obtaining of the electrode E1 may furthermore comprise drying the printed first ink I1 using a drier 46 in order to evaporate the solvent for solidifying the first layer 44, step 32. See also fig. 4b. This dried layer will comprise areas or patches of conductive material. The drier may be realized using an oven. However, it should be realized that other means of obtaining energy fro drying may be used, such as for instance using light.

The obtaining of the electrode E1 additionally comprises sintering the first layer 44 for joining the conductive areas or patches of conductive material in the first layer 44, step 34. The areas are in this case joined into a conductive layer forming the electrode E1. As can be seen the substrate 42 with first layer 44 may be placed in an oven 48 where the sintering takes place. As an alternative it is possible to use photo-sintering for joining the patches.

It should here be realized that the described production of the electrode is merely one way in which it may be produced. There exist countless other ways.

Through the above described production steps, an electrode E1 has been thus produced. However, the field-grading properties of the edges are missing.

According to the invention the field grading properties of the edges are obtained through oxidizing in order for the edges to comprise metal oxide as field-grading material, step 36.

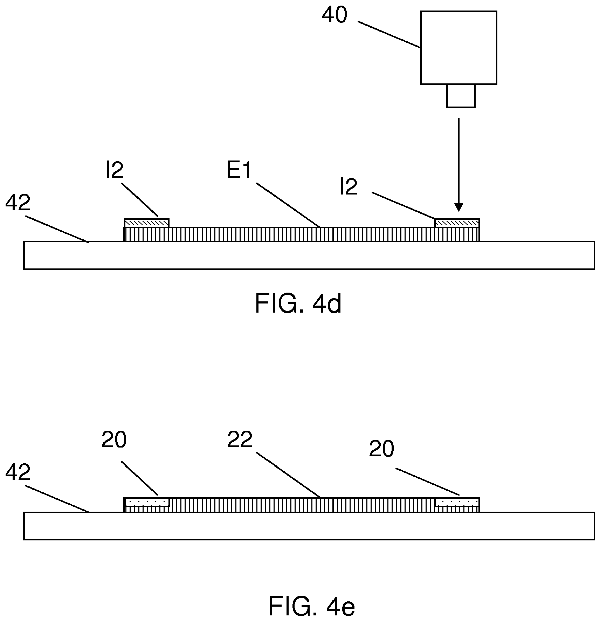

How this may be done is schematically shown in fig. 4d and e.

It is possible that the oxidizing involves applying a reactant on the edges of the electrode E1. In the view shown in fig. 4d and 4e this is done through a second ink I2 being printed on the edges of the electrode E1 using a printer. In this example it is the same printer 40 used for printing the electrode 22. However, it may also be a different one. This second ink I2 comprises the reactant including oxygen set to react with the metal of the electrode 22, thereby forming a metal oxide having field-grading properties. The reactant may for instance be Sodium Hydroxide (NaOH) or Hydrogen Peroxide (H₂O₂). As the metal of the example is Titanium, the oxide will in this case be Titanium Oxide (TiO₂). The time of application may be controlled so that a sufficient depth of oxidation is achieved. As an example a depth of about 100 - 500, perhaps around 300 nm may be obtained. As can be seen above, the reactant was printed subsequently to the printing of the first layer. It should be realized that as an alternative the reactant may be printed together with the printing of the first layer.

It can thereby be seen that a bushing electrode with a central region 22 of electrically conducting material together with edges 20 of field-grading material is obtained.

It should here be realized that other ways of oxidizing may be used, such as through blowing oxygen on the edges, perhaps at a temperature that promotes oxidizing. However, an ink may be preferred because it allows a precision in the forming of the thickness and width of the field grading material.

It can thus be seen that edges with field grading material may be obtained with great precision. This is also obtained with a limited number of production steps.

An additional step of sintering the electrode with field grading edges in order to improve the field grading properties even further is performed. This additional sintering, which may be photo-sintering employing a flash or laser sintering employing a laser, involves subjecting different parts of the electrode to heating during different long periods of time and/or different temperatures. The sintering is thus sintering in steps of decreasing time and/or decreasing temperature or vice versa. It is for instance possible that along a direction "radially" from the center of the electrode E1 and outwards to the outermost part of the edge, the electrode is subjected to heating in decreasing steps, where each step is associated with a corresponding length of time and/or temperature that thus decreases. The longest time and/or highest temperature is then used centrally, which is followed with decreasing length of time and/or radially out towards the outermost part of the edges. This additional sintering may start at the center of the electrode and continue outwards. It is also possible that it is started at the innermost part of the edges and continues towards the outmost part of the edges. It is thereby possible to obtain different conductivities and resistivities on the oxidized electrode and thereby an improved field grading. Naturally it is possible to apply the sintering in the opposite direction from the outermost part of the edge towards the center of the electrode using increasing steps instead.

From the foregoing discussion it is evident that the present invention can be varied in a multitude of ways. It should above all be realized that other metals than Titanium can be used, such as Silver, Aluminum, Copper, Iridium or Zinc.

It shall consequently be realized that the present invention is only to be limited by the following claims.

## Claims

1. A method for forming an electrode(E1) for a bushing (10) intended for high voltage applications, the method comprising obtaining (30, 32, 34) an electrode (E1) comprising an electrically conducting metal,
oxidizing (36) the edges (20) of the electrode (22) in order for the edges to comprise metal oxide of the same metal as field grading material, and sintering the electrode in steps of decreasing time and/or decreasing temperature along a direction from the center of the electrode towards the outermost part of the edge or in the opposite direction from the outermost part of the edge towards the center of the electrode using increasing steps so that different parts of the oxidized electrode have different conductivities and resistivities for improving the field-grading.

2. The method (10) according to claim 1, wherein the obtaining of the electrode comprises printing (30) a first ink (I1) comprising an electrically conducting metal on a substrate (42) for obtaining a first layer (44) that is to form the electrode.

3. The method according to claim 2, wherein the obtaining of the electrode comprises drying (32) the first ink (I1) for solidifying the first layer (44) and sintering (34) the solidified first layer (44) for joining the conductive areas of the first layer into a conductive layer forming the electrode (22).

4. The method according to any previous claim, wherein the oxidizing (36) comprises applying a reactant on the edges of the electrode, which reactant comprises oxygen for reacting with the metal of the electrode.

5. The method according to claim 4, wherein the oxidizing comprises printing an ink (I2) comprising the reactant on the edges of the electrode (22).

6. The method according to any previous claim, wherein the thickness of the field-grading material is in the range 100 - 500 nm, and with advantage 300 nm.

7. The method according to any previous claim, wherein the sintering is started at the center of the electrode.

8. The method according to any of claims 1 - 6, wherein the sintering is started at the innermost part of the edge.

9. A bushing (10) for high voltage applications comprising a central conductor (12) and an electrode (22) surrounding the bushing, the electrode being made of an electrically conducting metal and comprising edges (20) with metal oxide of the same metal as field grading material **characterized in that** different parts of the oxidized electrode have different conductivities and resistivities for an improved field grading.

10. The bushing (10) according to claim 9, wherein the field grading material has a thickness in the range 100 - 500 nm, and with advantage 300 nm.

11. The bushing (10) according to claim 9 or 10, wherein the electrode (22) has a thickness in the range 0.1 - 100 µm.

## Patentansprüche

1. Verfahren zum Bilden einer Elektrode (E1) für eine Buchse (10), die für Hochspannungsanwendungen vorgesehen ist, wobei das Verfahren umfasst:
Erhalten (30, 32, 34) einer Elektrode (E1), die ein elektrisch leitfähiges Metall umfasst,
Oxidieren (36) der Kanten (20) der Elektrode (22), damit die Kanten ein Metalloxid desselben Metalls als Feldabstufungsmaterial umfassen, und Sintern der Elektrode in Schritten einer abnehmenden Zeit und/oder einer abnehmenden Temperatur entlang einer Richtung von dem Zentrum der Elektrode zum äußersten Teil der Kante oder in der entgegengesetzten Richtung von dem äußersten Teil der Kante zu dem Zentrum der Elektrode, mithilfe von zunehmenden Schritten, sodass verschiedene Teile der oxidierten Elektrode unterschiedliche Leitfähigkeiten und spezifischen Widerstände zum Verbessern der Feldabstufung aufweisen.

2. Verfahren (10) nach Anspruch 1, wobei das Erhalten der Elektrode ein Drucken (30) einer ersten Tinte (I1) umfasst, die ein elektrisch leitfähiges Metall auf einem Substrat (42) umfasst, um eine erste Schicht (44) zu erhalten, die zum Bilden der Elektrode dient.

3. Verfahren nach Anspruch 2, wobei das Erhalten der Elektrode ein Trocknen (32) der ersten Tinte (I1) zum Verfestigen der ersten Schicht (44) und ein Sintern (34) der verfestigten ersten Schicht (44) umfasst, um die leitfähigen Bereiche der ersten Schicht in eine leitfähige Schicht einzubinden, welche die erste Elektrode (22) bildet.

4. Verfahren nach einem der vorhergehenden Ansprüche, wobei das Oxidieren (36) ein Applizieren eines Reaktionsmittels auf die Kanten der Elektrode umfasst, wobei das Reaktionsmittel Sauerstoff für eine Reaktion mit dem Metall der Elektrode umfasst.

5. Verfahren nach Anspruch 4, wobei das Oxidieren ein Drucken einer Tinte (I2) umfasst, die das Reaktionsmittel auf den Kanten der Elektrode (22) umfasst.

6. Verfahren nach einem der vorhergehenden Ansprüche, wobei die Dicke des Feldabstufungsmaterials in dem Bereich von 100 bis 500 nm und vorzugsweise bei 300 nm liegt.

7. Verfahren nach einem der vorhergehenden Ansprüche, wobei das Sintern in dem Zentrum der Elektrode gestartet wird.

8. Verfahren nach einem der Ansprüche 1 bis 6, wobei das Sintern an dem innersten Teil der Kante gestartet wird.

9. Buchse (10) für Hochspannungsanwendungen, die eine zentrale Leiterbahn (12) und eine Elektrode (22) umfasst, welche die Buchse umgibt, wobei die Elektrode aus einem elektrisch leitfähigen Metall gefertigt ist und Kanten (20) mit einem Metalloxid aus demselben Metall als Feldabstufungsmaterial umfasst, **dadurch gekennzeichnet, dass** verschiedene Teile der oxidierten Elektrode unterschiedliche Leitfähigkeiten und spezifische Widerstände für eine verbesserte Feldabstufung aufweisen.

10. Buchse (10) nach Anspruch 9, wobei das Feldabstufungsmaterial eine Dicke in dem Bereich von 100 bis 500 nm und vorzugsweise von 300 nm aufweist.

11. Buchse (10) nach Anspruch 9 oder 10, wobei die Elektrode (22) eine Dicke in dem Bereich von 0,1 bis 100 µm aufweist.

## Revendications

1. Procédé de formation d'une électrode (E1) pour une traversée (10) destinée à des applications haute tension, le procédé comprenant
l'obtention (30, 32, 34) d'une électrode (E1) comprenant un métal électriquement conducteur,
l'oxydation (36) des bords (20) de l'électrode (22) afin que les bords comprennent un oxyde métallique du même métal qu'un matériau de gradation de champ, et
le frittage de l'électrode par pas de durées décroissantes et/ou de températures décroissantes dans une direction allant du centre de l'électrode vers la partie la plus externe du bord ou dans la direction opposée depuis la partie la plus externe du bord vers le centre de l'électrode par pas croissants de telle sorte que des parties différentes de l'électrode oxydée présentent des conductivités et résistivités différentes pour améliorer la gradation de champ.

2. Procédé (10) selon la revendication 1, dans lequel l'obtention de l'électrode comprend l'impression (30) d'une première encre (I1) comprenant un métal électriquement conducteur sur un substrat (42) pour obtenir une première couche (44) qui sert à former l'électrode.

3. Procédé selon la revendication 2, dans lequel l'obtention de l'électrode comprend le séchage (32) de la première encre (I1) pour solidifier la première couche (44) et le frittage (34) de la première couche solidifiée (44) pour joindre les zones conductrices de la première couche en une couche conductrice formant l'électrode (22).

4. Procédé selon n'importe quelle revendication précédente, dans lequel l'oxydation (36) comprend l'application d'un réactif sur les bords de l'électrode, lequel réactif comprend de l'oxygène pour réagir avec le métal de l'électrode.

5. Procédé selon la revendication 4, dans lequel l'oxydation comprend l'impression d'une encre (I2) comprenant le réactif sur les bords de l'électrode (22).

6. Procédé selon n'importe quelle revendication précédente, dans lequel l'épaisseur du matériau de gradation de champ est comprise dans la plage de 100 à 500 nm, et de préférence 300 nm.

7. Procédé selon n'importe quelle revendication précédente, dans lequel le frittage est commencé au centre de l'électrode.

8. Procédé selon l'une quelconque des revendications 1 à 6, dans lequel le frittage est commencé au niveau de la partie la plus interne du bord.

9. Traversée (10) pour applications haute tension comprenant un conducteur central (12) et une électrode (22) entourant la traversée, l'électrode étant réalisée dans un matériau électriquement conducteur et comprenant des bords (20) avec un oxyde métallique du même métal qu'un matériau de gradation de champ **caractérisé en ce que** différentes parties de l'électrode oxydée présentent différentes conductivités et résistivités pour une gradation de champ améliorée.

10. Traversée (10) selon la revendication 9, dans laquelle le matériau de gradation de champ a une épaisseur comprise dans la plage de 100 à 500 nm, et de préférence 300 nm.

11. Traversée (10) selon la revendication 9 ou 10, dans lequel l'électrode (22) a une épaisseur dans la plage de 0,1 à 100 µm.
